# EUROPÄISCHE PATENTANMELDUNG

(11) **EP 4 070 655 A1**
(43) Veröffentlichungstag der Anmeldung: **12.10.2022**
(21) Anmeldenummer: 22167331.2
(22) Anmeldetag: 08.04.2022
(51) Int. Cl.: A01K 55/00, B25B 5/00

(54) **VORRICHTUNG ZUM GREIFEN VON WABENRAHMEN**

(30) Priorität: 09.04.2021 DE 102021108854
(71) Anmelder: IAV GmbH Ingenieurgesellschaft Auto und Verkehr, 10587 Berlin (DE)
(72) Erfinder: Freymann, Birger, 23966 Wismar (DE); Schlenther, Nils, 23966 Wismar (DE); Pöhland, Stephan, 18069 Rostock (DE)
(74) Vertreter: Wanzek, Jan

(57) **Zusammenfassung**

Es ist Aufgabe der vorliegenden Erfindung, bekannte Vorrichtungen zu verbessern. Diese Aufgabe wird mittels einer Vorrichtung zum Greifen von Wabenrahmen (2) bei der Durchführung von Pflegearbeiten an Bienenvölkern gelöst,
- aufweisend mehrere Greifereinheiten (1), welche für ein Greifen des oberen Rahmenteils (3) eines Wabenrahmens (2) voneinander beabstandet sind,
- aufweisend je Greifereinheit (1) einen Greifer (4) mit Greifbacken (4a, 4b), welche voneinander beabstandet sind, wobei der Abstand zwischen den Greifbacken (4a, 4b) größer ist, als der zu greifende Wabenrahmen (2) am oberen Rahmenteil (3) breit ist,
- wobei die Greifer (4) um eine Achse (A) drehbar sind, so dass bei Drehung der Greifer (4) um die Achse (A) das obere Rahmenteil (3) des Wabenrahmens (2) zwischen den Greifbacken (4a, 4b) geklemmt wird und somit ein Greifen des Wabenrahmens (2) erfolgt.

## Beschreibung

Die vorliegende Erfindung betrifft eine Vorrichtung zum Greifen von Wabenrahmen mit den Merkmalen der Patentansprüche.

Breite Verwendung bei der Haltung von Honigbienen finden so genannte Magazinbeuten. Magazinbeuten sind allgemein aus einem Boden, einer oder mehreren übereinander gesetzten Zargen in der Mitte und einem Deckel zusammengesetzt. In die insbesondere aus Holz oder Kunststoff bestehenden Zargen, welche oben und unten offen sind, werden von oben die so genannten Wabenrahmen bzw. Rähmchen mit den Bienenwaben hintereinander eingehängt. Bei der Durchführung von Prüf- und Pflegearbeiten an Bienenvölkern ist es erforderlich, diese Rähmchen aus der Zarge zu entfernen bzw. herauszunehmen, d. h. zu "ziehen", so dass eine Sichtbarkeit der Wabenflächen ermöglicht wird. Jedoch sind die Rähmchen sehr eng zueinander anliegend in eine Zarge eingehängt und werden zudem von den Bienen mit Kittharz und Wachs versehen, so dass der Imker vor dem Herausziehen der Rähmchen diese mittels eines geeigneten Werkzeugs zunächst losbrechen bzw. voneinander trennen muss, um im weiteren Verlauf zu versuchen, ein erstes Rähmchen aus der Anordnung bzw. der Vielzahl von Rähmchen nach oben zu bewegen. Außerdem sind vor oder während der beschriebenen Arbeiten Maßnahmen zum Beruhigen der Bienen zweckmäßig, insbesondere eine Anwendung von Rauch, welcher mittels einer dafür vorgesehenen Vorrichtung gebildet und in die geöffnete Zarge eingebracht wird. Darüber hinaus ergeben sich infolge der beschriebenen Arbeiten, welche allein an einem einzelnen Bienenvolk bzw. Magazin mit beispielsweise rund 30 Rähmchen immer wieder durchzuführen sind, nicht nur erhebliche Belastungen für den Imker, sondern auch die Notwendigkeit, die sich zunehmend mit Kittharz und Wachs überziehenden Werkzeuge zu reinigen, was insbesondere den so genannten Stockmeißel betrifft.

Gemäß dem Stand der Technik wurden angesichts der genannten Probleme Vorrichtungen vorgeschlagen, wobei die vielen wiederkehrenden Arbeiten eines Imkers automatisiert werden, siehe zum Beispiel KR20120060253A, KR1020180056457A oder US4573228A. Demnach werden auch verschiedene Greifsysteme offenbart, um Rähmchen zu erfassen und zu halten.

Es ist Aufgabe der vorliegenden Erfindung, die bekannten Vorrichtungen zu verbessern.

Diese Aufgabe wird erfindungsgemäß durch eine Vorrichtung mit den Merkmalen der Patentansprüche gelöst.

Weitere Ausgestaltungen der vorliegenden Erfindung und eine Darstellung der erreichten Vorteile sind dem nachfolgenden Ausführungsbeispiel sowie den abhängigen Patentansprüchen zu entnehmen.

Wie eingangs schon erläutert, finden bei der Haltung von Honigbienen so genannte Magazinbeuten als Behausung bzw. Bienenstock breite Verwendung. Magazinbeuten sind allgemein aus einem Boden, einer oder mehreren übereinander gesetzten Zargen in der Mitte und einem Deckel zusammengesetzt. In die insbesondere aus Holz oder Kunststoff bestehenden Zargen, welche oben und unten offen sind, werden von oben die so genannten Wabenrahmen bzw. Rähmchen mit den Bienenwaben hintereinander eingehängt. Bei der Durchführung von Prüf- und Pflegearbeiten an Bienenvölkern ist es erforderlich, diese Rähmchen aus der Zarge zu entfernen bzw. herauszunehmen, d. h. zu "ziehen", so dass eine Sichtbarkeit der Wabenflächen ermöglicht wird. Jedoch sind die Rähmchen sehr eng zueinander anliegend in eine Zarge eingehängt und werden zudem von den Bienen mit Kittharz und Wachs versehen, so dass der Imker vor dem Herausziehen der Rähmchen mittels eines geeigneten Werkzeugs diese zunächst losbrechen bzw. voneinander trennen muss, um im weiteren Verlauf zu versuchen, ein erstes Rähmchen aus der Anordnung bzw. der Vielzahl von Rähmchen nach oben zu bewegen. Jedenfalls ist es problematisch, ein einzelnes, insbesondere das erste Rähmchen aus dem Verband der Vielzahl miteinander verklebter Rähmchen zu lösen, es besteht stets die unerwünschte Neigung, gleichzeitig mehrere Rähmchen, sozusagen im Block, nach oben bzw. aus der Zarge herauszubewegen.

Die Vorrichtung zum Greifen von Wabenrahmen gemäß der vorliegenden Erfindung ist zunächst Teil eines beliebig aufgebauten Bewegungsapparates bzw. Roboters, der bevorzugt autonom fahrbar bzw. mobil ausgeführt ist, um zu einzelnen Bienenstöcken bewegt zu werden. Dieser Apparat weist ein Grundgestell und einen Manipulator bzw. Roboterarm auf (nicht gezeigt), an dem (zumindest) die Vorrichtung zum Greifen von Wabenrahmen, d. h. zumindest ein Effektor bzw. Greifer/Greifersystem angeordnet ist. Insbesondere sind an einem Grundgestell Linearführungen vorgesehen, um die Vorrichtung zum Greifen von Wabenrahmen bzw. den Greifer/das Greifersystem gegenüber einer Magazinbeute auf und ab sowie über einer geöffneten Zarge und die darin enthaltenen Wabenrahmen vor und zurück bewegen zu können.

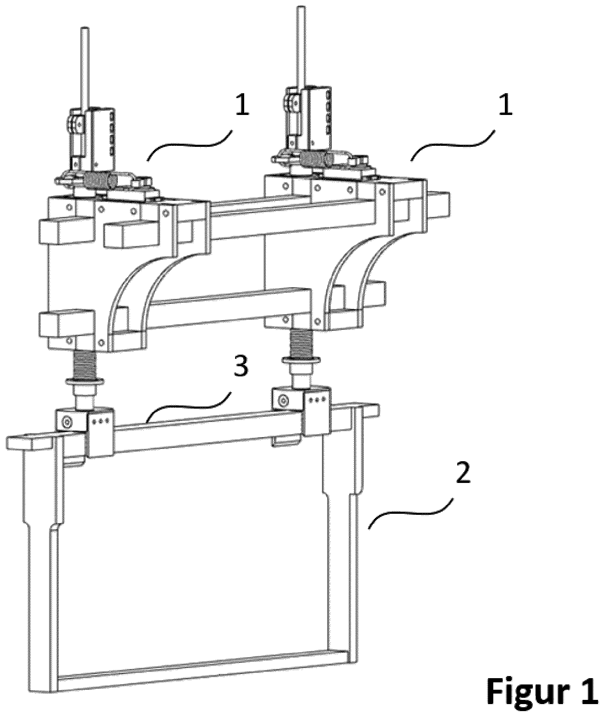

Die Vorrichtung zum Greifen von Wabenrahmen bzw. das erfindungsgemäße Greifsystem weist, wie in Figur 1 gezeigt, bevorzugt mehrere, insbesondere zwei Greifereinheiten 1 zum Erfassen und Halten eines Wabenrahmens 2 auf, welche voneinander beabstandet an einer Tragstruktur angeordnet sind, so dass ein Wabenrahmen 2 an seiner Oberseite 3 bzw. dem oberen Rahmenteil 3 des Wabenrahmens 2 an beiden Seiten sicher erfasst und gehalten werden kann, wie im weiteren Verlauf noch konkreter beschrieben.

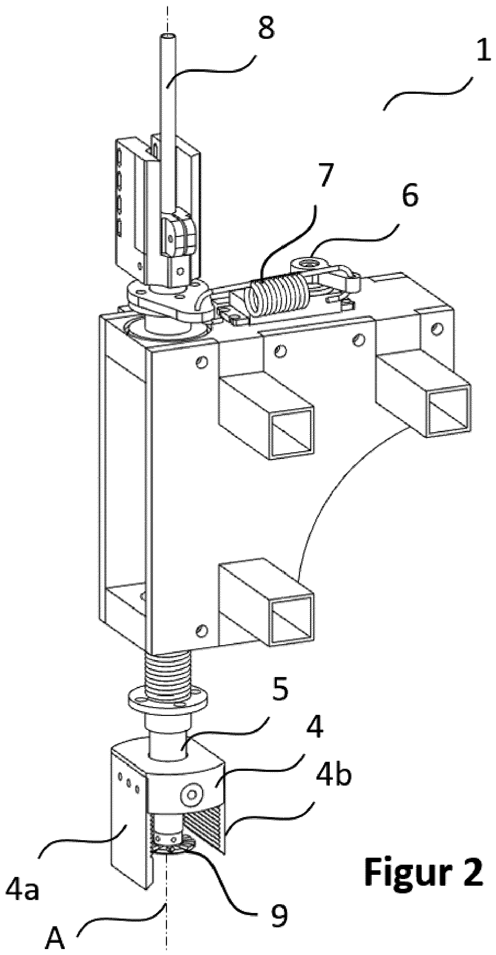

Wie in Figur 2 gezeigt, weist eine Greifereinheit 1 einen Greifer 4 auf, der insbesondere ein Mehrfingergreifer, bevorzugt ein Zweifingergreifer ist. Der Greifer 4 ist insbesondere starr ausgeführt, d. h. zwei Finger/Greifbacken 4a, 4b sind fest voneinander beabstandet, wobei der Abstand zwischen den beiden Greifbacken 4a, 4b größer ist, als der Wabenrahmen 2 an seiner Oberseite 3 breit ist, so dass durch eine Relativbewegung zwischen Greifer 4 und Wabenrahmen 2 in Richtung des oberen Rahmenteils 3 des Wabenrahmes 2 das obere Rahmenteil 3 des Wabenrahmens 2 zwischen den Greifbacken 4a, 4b des Greifers 4 positioniert wird bzw. in die durch die Greifbacken 4a, 4b gebildete Umklammerung einfährt, wie es in Figur 1 zu erkennen ist. Mit anderen Worten entspricht der Greifer 4 einem (starren) Parallelgreifer bzw. wird mittels eines Mehrfingergreifers 4 ein solcher Parallelgreifer gebildet, der in Richtung des oberen Rahmenteils 3 des Wabenrahmens 2 geöffnet ist, wobei die Öffnung des Parallelgreifers 4 derart dimensioniert ist, dass der obere Rahmenteil 3 des Wabenrahmens 2 zwischen den Fingern/Greifbacken 4a, 4b positioniert werden kann.

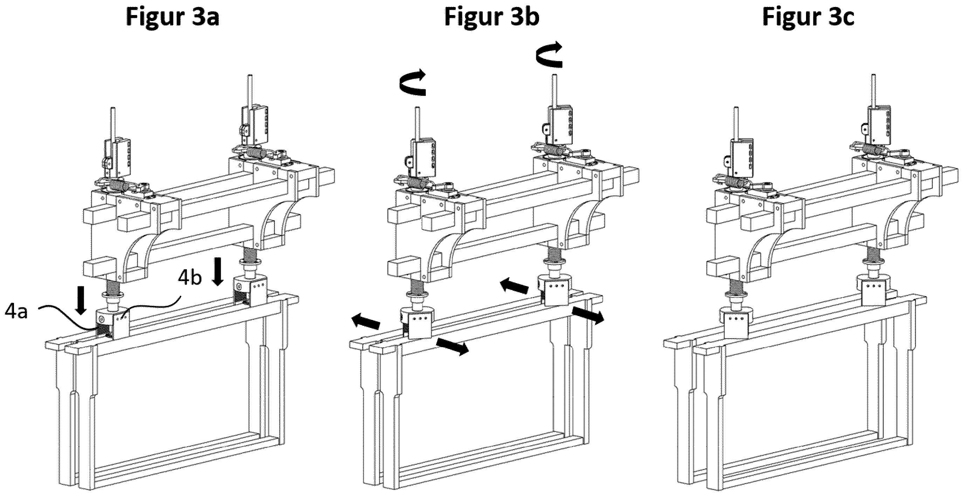

Der Greifer 4 ist um eine Achse A drehbar, so dass insbesondere das obere Rahmenteil 3 eines Wabenrahmens 2 zwischen den Fingern/Greifbacken 4a, 4b des Mehrfingergreifers 4 (ein-)geklemmt bzw. gehalten werden kann, was im weiteren Verlauf noch konkreter beschrieben wird. Entlang der Achse A ist eine Welle 5 angeordnet, welche mit dem Greifer 4 bzw. dem Grundkörper des Greifers 4 drehfest verbunden ist, so dass ein Drehmoment von einem Stellmotor 6 über eine (Zug-)Feder 7 auf den Greifer 4 übertragen bzw. ausgeübt wird bzw. werden kann. Die Welle 5 ist als Hohlwelle ausgeführt bzw. entspricht einem Rohr. In der Welle 5 ist (koaxial) ein weiteres Rohr 8 angeordnet bzw. geführt. Das Rohr 8 ist innerhalb der Welle 5 entlang der Achse A beweglich und bevorzugt federbelastet, so dass es gegen die Federkraft einer Druckfeder (nicht gezeigt) gegenüber der Welle 5 innerhalb der Welle 5 bewegt werden kann und mittels der somit in der Druckfeder bereitstehenden Federkraft erneut bewegt werden kann, insbesondere wenn eine äußere Krafteinwirkung auf das Rohr 8 eingestellt/reduziert wird. An dem Ende des Rohres 8, das dem oberen Rahmenteil 3 des Wabenrahmens 2 zugewandt ist, befindet sich bevorzugt eine (radiale) Anordnung mehrerer Öffnungen 9 bzw. Bohrungen oder Düsen, so dass ein insbesondere gasförmiges Medium, wie im weiteren Verlauf genauer beschrieben, insbesondere bei Bedarf, durch das Rohr 8 geführt werden kann und durch die Öffnungen 9 sowohl in den Bereich der Wabenrahmen 2 bzw. in die Zarge/die Magazinbeute als auch in den Bereich der Greifbacken 4a, 4b geleitet werden kann. Wie in Figur 2 deutlich zu erkennen ist, weisen die beiden Greifbacken 4a, 4b erfindungsgemäß unterschiedliche Längen bzw. unterschiedlich große Längserstreckungen auf, so dass eine der beiden Greifbacken 4a, 4b dem oberen Rahmenteil 3 des Wabenrahmens 2 näher ist, als die andere. Die damit verbundenen vorteilhaften Wirkungen werden gemäß Figur 3a bis 3c beschrieben. Dadurch, dass die erste Greifbacke 4a ausgehend von dem Greifer 4, d. h. dem Grundkörper des Greifers, in Richtung des oberen Rahmenteils 3 eines im weiteren Verlauf zu greifenden Wabenrahmens 2 länger ist, als die zweite Greifbacke 4b, wird bei einer Positionierung der Greifeinheit 1 bzw. der beiden Greifeinheiten 1 derart, dass die erste Greifbacke 4a über einem Zwischenraum zwischen zwei Wabenrahmen 2 (oder einem Wabenrahmen 2 und Zargen-/Magazinwand) angeordnet ist, wie in Figur 3a gezeigt, bei einer Relativbewegung zwischen Wabenrahmen 2 bzw. Zarge und Greifereinheit(en) 1, insbesondere einer Abwärtsbewegung der Greifereinheit(en) 1 in Richtung der Wabenrahmen 2, siehe Pfeile in Figur 3a, die längere erste Greifbacke 4a in diesen Zwischenraum eingefahren bzw. dort positioniert, jedoch wird die kürzere zweite Greifbacke 4b nicht in einen Zwischenraum eingefahren bzw. dort positioniert, sondern verbleibt bzw. verharrt in einer Ebene oberhalb der Oberseite 3 des Wabenrahmens 2. Der Greifer 4 bzw. die Greifer 4 sind dabei derart um die Achse A positioniert bzw. gedreht, dass die beiden Greifbacken 4a, 4b und die Oberseite 3 des betreffenden Wabenrahmens 2 fluchten bzw. die beiden Greifbacken 4a, 4b und die Flanken der Oberseite 3 des Wabenrahmens 2 parallel zueinander sind. Wie in Figur 3b gezeigt, erfolgt im weiteren Verlauf ein Verdrehen/eine Rechtsdrehung des Greifers 4/der beiden Greifer 4, siehe Drehpfeile. Dabei wird die in Figur 2 gezeigte (Zug-)Feder 7 erfindungsgemäß vorteilhaft nicht auf Zug belastet bzw. gedehnt, sondern auf Druck belastet und wirkt somit als starres Verbindungselement, so dass eine vergleichsweise große (Dreh-)Kraft/ein großes Drehmoment vom Servomotor 6 auf den/die Greifer 4 übertragen bzw. ausgeübt wird. Somit werden die mehreren hintereinander in die Zarge/das Magazin eingehängten und durch Kittharz und Wachs miteinander verklebten Wabenrahmen 2 in Bewegung versetzt bzw. erfolgt ein Losbrechen/Voranlösen der Wabenrahmen 2 durch diese Krafteinwirkung, welche durch die erste Greifbacke 4a des Greifers/der Greifer 4 durch ein Verdrehen des Greifers/der Greifer 4 in den Wabenrahmen 2 eingeleitet wird. Diese Krafteinwirkung auf die Wabenrahmen 2 bzw. diese Bewegung der Wabenrahmen 2 ist in Figur 3b durch vier Pfeile angedeutet. Wie in Figur 3b zu erkennen ist, kommt bei der beschriebenen Verdrehung des/der Greifer(s) 4 zum Zweck des Losbrechens der Wabenrahmen 2 die jeweils kürzere zweite Greifbacke 4b nicht in Kontakt mit einem Wabenrahmen 2, so dass eben die soeben beschriebene Krafteinwirkung/Bewegung ermöglicht wird. Gemäß Figur 3c ist das Ergebnis dieses Arbeitsschrittes des Losbrechens der Wabenrahmen 2 gezeigt, nämlich, dass die Wabenrahmen 2 gegenüber dem Ausgangszustand gemäß Figur 3a voneinander losgelöst/losgebrochen sind und nunmehr einen gewissen Abstand voneinander aufweisen.

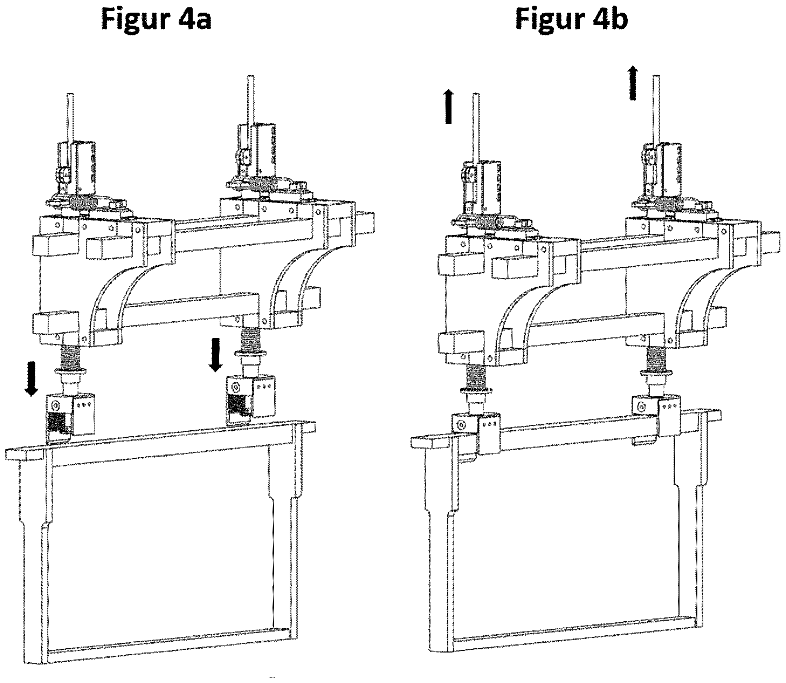

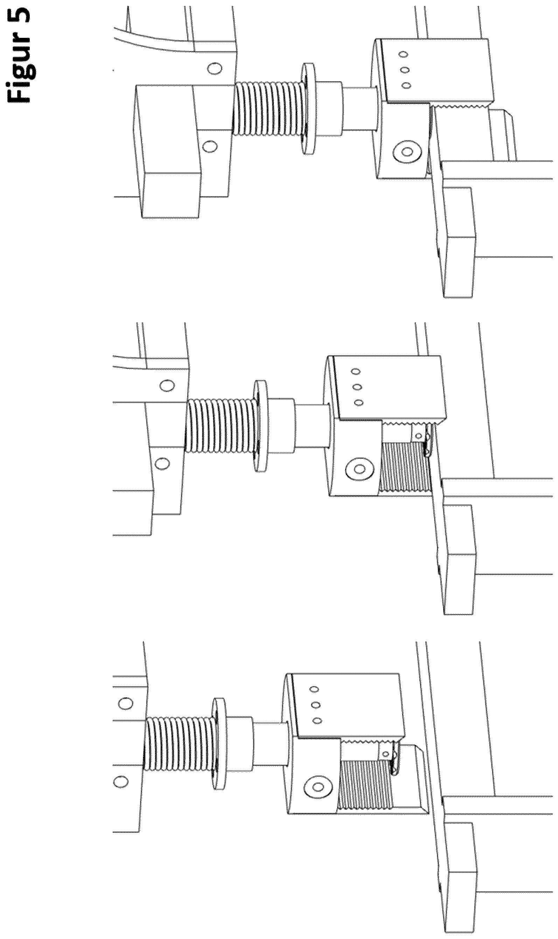

Gemäß den Figuren 4a und 4b ist ein weiterer Aspekt der vorliegenden Erfindung gezeigt. Wie in Figur 4a gezeigt, erfolgt, wie schon im Zusammenhang mit Figur 3a beschrieben, eine Relativbewegung zwischen Wabenrahmen 2 bzw. Zarge und Greifereinheit(en) 1, insbesondere eine Abwärtsbewegung der Greifereinheit(en) 1 in Richtung der Wabenrahmen 2, siehe Pfeile in Figur 4a, wobei der Greifer 4 bzw. die Greifer 4 dabei derart um die Achse A positioniert bzw. gedreht sind, dass die beiden Greifbacken 4a, 4b und die Oberseite 3 des betreffenden Wabenrahmens 2 fluchten bzw. die beiden Greifbacken 4a, 4b und die Flanken der Oberseite 3 des Wabenrahmens 2 parallel zueinander sind und sowohl die erste längere Greifbacke 4a, als auch die zweite kürzere Greifbacke 4b in Zwischenräume zwischen Wabenrahmen 2 einfahren bzw. dort positioniert werden. Wie durch einen Vergleich zwischen Figur 4a und 4b zu erkennen ist, erfolgt beim Einfahren/Positionieren der Greifbacken 4a, 4b in die Zwischenräume zunächst ein Aufsetzen des Rohres 8 bzw. des Endes des Rohres 8, an dem bevorzugt Öffnungen 9 bzw. Auslassdüse(n) für das Leiten/Auslassen eines Mediums angeordnet sind, auf der Oberseite 3 des Wabenrahmens 2, so dass bei einem weiteren Einfahren/Positionieren der Greifbacken 4a, 4b in die Zwischenräume das Rohr 8 innerhalb der Welle 5 entlang der Achse A gegen die Federkraft einer Druckfeder (nicht gezeigt) gegenüber der Welle 5 innerhalb der Welle 5 (nach oben) bewegt wird (siehe Pfeile in Figur 4b) und somit durch eine geeignete Sensorik betreffend die Längsbewegung des Rohres 8 eine Erkennung/Bestimmung erfolgt, ob bzw. wann die Greifbacken 4a, 4b in ausreichendem Maße für ein nachfolgendes Erfassen/Greifen/Halten der Wabenrahmen 2 in die Zwischenräume eingefahren sind. In Figur 5 ist diese Abfolge nochmals im Detail gezeigt, wobei hier gut erkennbar das Ende des Rohres 8 (mit den Auslassdüsen) dann in eine Position knapp unterhalb der zweiten kürzeren Greifbacke 4b mittels der (nicht gezeigten) Druckfeder verbracht wird, solange das Ende des Rohres 8 nicht in Kontakt mit der Oberfläche der Wabenrahmen 2 tritt.

Erfindungsgemäß ist, wie schon angedeutet, das Rohr 8 bzw. die Hohlwelle 5 für ein Durchleiten eines insbesondere gasförmigen Mediums vorgesehen. Das Medium ist entweder Rauch, der zum Zweck der Beruhigung der Bienen in den Bereich der Wabenrahmen 2 bzw. in die Zarge/das Magazin geleitet wird, nämlich bevorzugt zeitlich vor und während des Losbrechens/Greifens/Haltens/Herausnehmens eines Wabenrahmens 2 aus der Zarge oder das Medium ist Dampf (z. B. Wasserdampf) eines Reinigungs- und/oder Desinfektionsmittels, wobei durch die Anordnung der Austrittslöcher eine Reinigung der Greif-/Klemmflächen an den Greifbacken 4a, 4b von anhaftendem Kittharz und Wachs erfolgt. D. h. gemäß der vorliegenden Erfindung werden auf vorteilhafte Weise sowohl die Funktion der Drehung des/der Greifer/s 4 und die Leitung bzw. Führung eines gasförmigen Mediums zur Beruhigung der Bienen und der Reinigung der Greifbacken 4a, 4b miteinander kombiniert, nämlich durch das Ausführen der Welle 5 als Hohlwelle, in der bevorzugt ein Rohr 8 als Leitung für das Medium geführt ist, welches zudem auch als (Positions-)Sensor genutzt wird, wie oben beschrieben. Natürlich kann auch nur die als Hohlwelle ausgeführte Welle 5 als Leitung für das genannte Medium bzw. die genannten Medien verwendet werden.

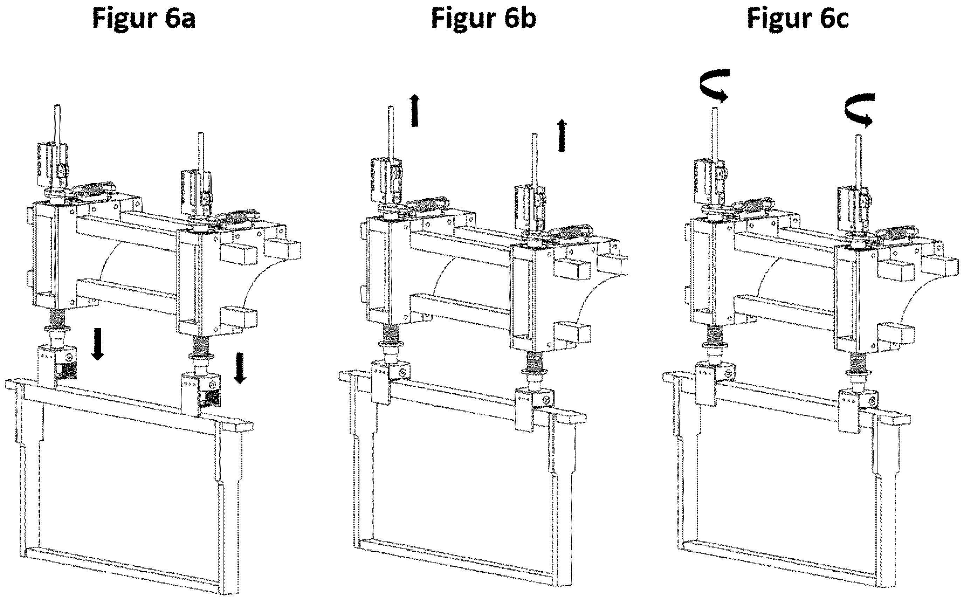

Weiterhin ist gemäß den Figuren 6a bis 6c der Prozess/ein Verfahren des Greifens und Haltens eines Wabenrahmens 2 mittels des erfindungsgemäßen Greifsystems 1 dargestellt. Gemäß Figur 6a erfolgt, wie schon beschrieben, ein Positionieren der Greifer 4 über dem zu greifenden Wabenrahmen 2 sowie eine Relativbewegung zwischen den Greifern 4 und dem Wabenrahmen 2 (siehe Pfeile), so dass, wie in Figur 6b gezeigt, die Greifer 4 im Ergebnis das obere Rahmenteil 3 des Wabenrahmens 2 umfassen und das Rohr 8 entlang der Achse A bewegt wurde (siehe Pfeile) und eine Endlage der Greifer 4 in Abhängigkeit dieser Bewegung erkannt wurde und infolgedessen die genannte Relativbewegung beendet wird. Wie in Figur 6c dargestellt, erfolgt anschließend ein Verdrehen der Greifer 4 um die Achse A, so dass das obere Rahmenteil 3 des Wabenrahmens 2 zwischen den beiden Greifbacken 4a, 4b geklemmt wird. D. h. die Greifer 4 werden über den jeweiligen Servomotor 6 verdreht. Die Verdrehung erfolgt dabei in Zugrichtung der (Verbindungs-)Feder 7. Wenn sich zum Zeitpunkt der Verdrehung ein Wabenrahmen 2 zwischen den Greifbacken 4a, 4b befindet, dann können diese nicht weiter rotieren. In diesen Fall wird die Feder 7 ausgelenkt. Über den Verfahrweg des jeweiligen Servomotors 6 kann eine definierte Federkraft eingestellt werden. Durch die definierte Kraft kann ein sicheres Halten der Wabenrahmen 2 sichergestellt werden.

Abschließend sei folgender erfindungsgemäß vorteilhafter Effekt beschrieben. Dadurch, dass das Rohr 8 innerhalb der Welle 5 entlang der Achse A beweglich und federbelastet ist, so dass es gegen die Federkraft einer Druckfeder (nicht gezeigt) gegenüber der Welle 5 innerhalb der Welle 5 bewegt werden kann und mittels der somit in der Druckfeder bereitstehenden Federkraft erneut bewegt werden kann, ergibt sich dann, wenn ein Halten eines Wabenrahmens 2 nicht mehr erforderlich ist und der Wabenrahmen 2 wieder in der Zarge positioniert ist und die Greifer 4 aus einer gegenüber dem oberen Rahmenteil 3 des Wabenrahmes 2 verdrehten Stellung in eine Neutralposition versetzt werden, eine Krafteinwirkung auf das Rohr 8 und somit auf den Wabenrahmen 2 infolge der in der Druckfeder gespeicherten Federkraft/Energie, so dass der Wabenrahmen 2 von/aus dem/den Greifer(n) 4 gelöst bzw. ausgestoßen wird. Mit anderen Worten wird in der Neutralposition des jeweiligen Greifers 4, also wenn die Greifbacken 4a, 4b parallel zur Aufnahme der Greifereinheit 1 bzw. zum Wabenrahmen 2 ausgerichtet sind, der Wabenrahmen 2 mithilfe der Druckfeder über das Rohr 8 definiert herausgedrückt. Dies wirkt einer Verklebung des Wabenrahmens 2 mit den Greifern 4 entgegen.

## Patentansprüche

1. Vorrichtung zum Greifen von Wabenrahmen (2) bei der Durchführung von Pflegearbeiten an Bienenvölkern,
- aufweisend mehrere Greifereinheiten (1), welche für ein Greifen des oberen Rahmenteils (3) eines Wabenrahmens (2) voneinander beabstandet sind,
- aufweisend je Greifereinheit (1) einen Greifer (4) mit Greifbacken (4a, 4b), welche voneinander beabstandet sind, wobei der Abstand zwischen den Greifbacken (4a, 4b) größer ist, als der zu greifende Wabenrahmen (2) am oberen Rahmenteil (3) breit ist,
- wobei die Greifer (4) um eine Achse (A) drehbar sind, so dass bei Drehung der Greifer (4) um die Achse (A) das obere Rahmenteil (3) des Wabenrahmens (2) zwischen den Greifbacken (4a, 4b) geklemmt wird und somit ein Greifen des Wabenrahmens (2) erfolgt.

2. Vorrichtung nach Patentanspruch 1, wobei die Greifbacken (4a, 4b) unterschiedliche Längen aufweisen, so dass dadurch, dass eine erste Greifbacke (4a) ausgehend von dem jeweiligen Greifer (4) in Richtung des oberen Rahmenteils (3) des im weiteren Verlauf zu greifenden Wabenrahmens (2) länger ist, als die zweite Greifbacke (4b) und bei einer Positionierung der Greifer (4) derart, dass die jeweils erste Greifbacke (4a) über einem Zwischenraum zwischen zwei Wabenrahmen (2) oder einem Wabenrahmen (2) und der Wandung des Magazins, in dem mehrere Wabenrahmen (2) angeordnet sind, bei einer Relativbewegung zwischen oberem Rahmenteil (3) und Greifern (4) die jeweils längeren ersten Greifbacken (4a) in diesen Zwischenraum eingefahren werden, jedoch die kürzeren zweiten Greifbacken (4b) nicht in einen Zwischenraum eingefahren werden, sondern in einer Ebene oberhalb des oberen Rahmenteils (3) des Wabenrahmens (2) verbleiben, wobei durch ein Verdrehen der Greifer (4) ein Losbrechen des Wabenrahmens (2) durch diese Krafteinwirkung erfolgt, welche durch die ersten Greifbacken (4a) der Greifer (4) durch ein Verdrehen der Greifer (4) in den Wabenrahmen (2) eingeleitet wird.

3. Vorrichtung nach Patentanspruch 1 oder 2, wobei entlang der jeweiligen Achse (A) eine Welle (5) angeordnet ist, welche mit dem jeweiligen Greifer (4) drehfest verbunden ist, so dass durch den Betrieb eines Stellmotors (6) ein Drehmoment auf den jeweiligen Greifer (4) ausgeübt wird.

4. Vorrichtung nach Patentanspruch 3, wobei die Welle (5) als Hohlwelle ausgeführt ist.

5. Vorrichtung nach Patentanspruch 4, wobei die als Hohlwelle ausgeführte Welle (5) derart eingerichtet ist, dass ein Medium hindurchleitbar ist.

6. Vorrichtung nach Patentanspruch 4, wobei in der als Hohlwelle ausgeführten Welle (5) ein Rohr (8) angeordnet ist, durch das ein Medium hindurchleitbar ist.

7. Vorrichtung nach Patentanspruch 6, wobei das Rohr (8) innerhalb der Welle (5) entlang der Achse (A) beweglich und federbelastet ist, so dass es gegen die Federkraft einer Feder gegenüber der Welle (5) innerhalb der Welle (5) bewegbar ist und mittels der somit in der Feder bereitstehenden Federkraft erneut bewegt werden kann, wenn eine äußere Krafteinwirkung auf das Rohr (8) eingestellt oder reduziert wird.

8. Vorrichtung nach Patentanspruch 6 oder 7, wobei an dem Ende des Rohres (8), das dem oberen Rahmenteil (3) des Wabenrahmens (2) zugewandt ist, mehrere Öffnungen (9) vorgesehen sind, wobei ein Medium durch das Rohr (8) und durch die Öffnungen (9) sowohl in den Bereich der Wabenrahmen (2) und/oder in die Magazinbeute und/oder in den Bereich der Greifbacken (4a, 4b) geleitet wird.

9. Vorrichtung nach Patentanspruch 7 oder 8, wobei ein Sensor betreffend die Längsbewegung des Rohres (8) vorgesehen ist, so dass beim Einfahren der Greifbacken (4a, 4b) in Zwischenräume zwischen Wabenrahmen (2) oder einem Wabenrahmen (2) und der Wandung des Magazins, in dem mehrere Wabenrahmen (2) angeordnet sind, zunächst ein Aufsetzen des Endes des Rohres (8) auf der Oberseite (3) des Wabenrahmens (2) erfolgt, so dass bei einem weiteren Einfahren in Zwischenräume das Rohr (8) innerhalb der Welle (5) entlang der Achse (A) gegen die Federkraft der Feder gegenüber der Welle (5) innerhalb der Welle (5) bewegt wird und somit durch den Sensor eine Bestimmung erfolgt, ob die Greifbacken (4a, 4b) in ausreichendem Maße für ein nachfolgendes Greifen des Wabenrahmens (2) in Zwischenräume eingefahren sind.

10. Vorrichtung nach Patentanspruch 1 bis 9, wobei die Vorrichtung zum Greifen von Wabenrahmen Teil eines Roboters mit einem Roboterarm ist.
